# EUROPÄISCHE PATENTANMELDUNG

(11) **EP 1 215 324 A2**
(43) Veröffentlichungstag der Anmeldung: **19.06.2002**
(21) Anmeldenummer: 02000194.7
(22) Anmeldetag: 25.09.1996
(51) Int. Cl.: D04H 1/64

(54) **Verfahren zur Herstellung wiederverwertbarer Faserverbundwerkstoffe**

(30) Priorität: 26.09.1995 DE 19535792
(62) Teilanmeldung aus: 96115375.6
(71) Anmelder: BASF AKTIENGESELLSCHAFT, 67056 Ludwigshafen (DE)
(72) Erfinder: Rupaner, Robert, Dr., 67059 Ludwigshafen (DE); Schumacher, Karl-Heinz, Dr., 67433 Neustadt (DE); Kirchner, Werner, Dr., 67434 Neustadt (DE); Morrison, Ronald Bradley, Dr., 68161 Mannheim (DE); Offner, Roland, 76706 Dettenheim (DE); Seyffer, Hermann, Dr., 69123 Heidelberg (DE)
(74) Vertreter: Isenbruck, Günter, Dr.

(57) **Zusammenfassung**

Die vorliegende Erfindung betrifft einen wiederverwertbaren Faserverbundwerkstoff, bei dem die Fasern durch ein durch radikalische Polymerisation erhaltenes polymeres Bindemittel miteinander verbunden werden, bei dem es sich um ein bei pH-Werten > 9 auflösbares und durch Absenken des pH-Wertes redispergierbares filmbildendes Bindemittel mit einer der nachfolgenden Zusammensetzung I) bis V) handelt:
I) 60 bis 85 Gew.-% n-Butylacrylat oder Ethylacrylat, 5 bis 20 Gew.-% Acrylnitril oder Methylmethacrylat oder Styrol und 10 bis 20 Gew.-% Methacrylsäure oder Acrylsäure.
II) 50 bis 80 Gew.-% n-Butylacrylat, 10 bis 50 Gew.-% Vinylacetat oder Vinylpropionat und 1 bis 30 Gew.-% Methacrylsäure oder Acrylsäure.
III) 30 bis 50 Gew.-% n-Butylacrylat, 30 bis 50 Gew.-% Ethylacrylat und 5 bis 30 Gew.-% Methacrylsäure oder Acrylsäure.
IV)40 bis 80 Gew.-% Methylmethacrylat, 10 bis 30 Gew.-% n-Butylacrylat oder Ethylhexylacrylat, 01 bis 20 Gew.-% Styrol und 5 bis 30 Gew.-% Methacrylsäure oder Acrylsäure.
V) 50 bis 80 Gew.-% Butadien, 10 bis 30 Gew.-% Styrol und/oder Acrylnitril, 5 bis 30 Gew.-% Methacrylsäure.

## Beschreibung

Die Erfindung betrifft ein Verfahren zur Herstellung wiederverwertbarer Faserverbundwerkstoffe, bei dem Fasern mittels eines polymeren Bindemittels miteinander verbunden werden.

Der Recyclingfähigkeit von Industriegütern steht im wesentlichen deren Materialuneinheitlichkeit entgegen. Sie ist insbesondere dann erschwert, wenn Formteile oder Verbundmaterialien mit Lack oder Kunststoff beschichtet sind, bei denen sich die Komponenten nur schwer voneinander separieren lassen. Häufig können diese Materialien nur schwer oder gar nicht in einen Recycling-Kreislauf zurückgeführt werden und müssen daher kostenintensiv entsorgt werden. Die stoffliche Wiederverwendung bereits gebrauchter Güter oder Reste, die bei Herstellung der Gebrauchsgüter als Schnittabfall anfallen, stellt einen hohen Anreiz für die Verarbeiter dar. Demnach kommt der Möglichkeit, abgebrauchte Teile der verschiedensten Zusammensetzung möglichst weitgehend zu Neuteilen gleicher Art aufzubereiten, nicht nur erhebliche volkswirtschaftliche, sondern auch umweltschutzbedingte Bedeutung zu.

Zur Erhöhung der Widerstandsfähigkeit gegen mechanische Belastung werden Fasergebilde mit Bindemitteln zu sogenannten Faserverbundwerkstoffen verfestigt. Diese Bindemittel können z.B. in Form von Dispersionen vorliegen und zur Anwendung kommen. Die erhöhte Festigkeit resultiert aus der Bindung der Fasern durch die filmbildenden Polymeren, die an der Faser haften und so das Fasergebilde verstärken. In zahlreichen Anwendungen muß dieser Polymerfilm ausreichend stabil gegen Kontakt mit Wasser sein, damit der gesamte Faser-Binder-Verbund auch im nassen Zustand ausreichende mechanische Festigkeiten besitzt.

Für die Wiederverwertung interessant sind beispielsweise die bei dem Zuschnitt von Formteilen aus Bindemittel-verfestigten Vliesstoffen anfallenden Stanz- oder Schnittreste und -abfälle, deren Faser- aber auch Bindemittelanteil für den weiteren Produktionsprozeß verloren sind. Beispiele hierfür sind Reste, die bei der Herstellung von Einlageteilen für textile Anwendungen, Windeln oder Hygieneartikeln anfallen. Derartige Produkte sind weich und flexibel. Ein weiteres Anliegen ist die Wiederverwertung von Gebrauchsgütern wie die Innenverkleidungsteilen von Kraftfahrzeugen, Radkastenabdeckungen, Hutablagen und anderen, vergleichbaren Teilen, die aus Trägerformteilen aus bindemittelhaltigen, verpreßten Werkstoffen. Derartige Produkte sind hart, geformt, unflexibel und in der Regel thermoplastisch verformbar. Ein weiteres Anliegen ist die Rückführung und auch die Wiederverwendung von textilen Bodenbelägen, Teppichwerkstoffe oder Teppichböden und -fliesen. Diese Flächenwaren bestehen meist aus genadelten oder bindemittelverfestigten faserartigen Materialien (Flor) mit einem Schaumrücken, der einen hohen Anteil füllstoffhaltigen geschäumten Latex enthält. Derartige Produkte sind wenig flexibel, aber noch nicht steif.

Die hier angesprochenen Teile sind Faserverbundwerkstoffe, bei denen die zugrundeliegenden Fasern mit Hilfe von duro- oder thermoplastischen Bindemitteln gebunden sind und mit Hilfe von Druck und Temperatur verdichtet und verfestigt wurden. Die Auflösung, d.h. der "Aufschluß" eines solchen Faserverbundes wäre unweigerlich mit einer Zerstörung der Fasern selbst oder des Bindemittelpolymeren verbunden, so daß aus dem gewonnenen Material bezüglich Herstellungs- und Bauteileigenschaften kein gleichwertiges Neuformteil gefertigt werden könnte.

Derartige Faserverbundwerkstoffe sind insbesondere Vliesstoffe (siehe Ullmanns Enc. d. techn. Chem.), insbesondere in Form von thermoverformbaren Nadelvliesteppichen, wie sie beispielsweise in der Automobilindustrie Verwendung finden. Bei dem Bestreben, derartige Vliesstoffe wiederzuverwerten, ist bekannt, daß polymere Bindemittel aus dem Vliesstoff herauszulösen und das dabei anfallende Faservlies weiterzuverwerten (DE-A-43 15 875). Der Nachteil dieses Verfahrens ist das Entsorgen der Bindemittellösung.

Aus der EP-A 0 576 128 sind Dispersionsmischungen insbesondere für Klebstoffe bekannt, die sich für einen Repulping-Prozeß eignen, ohne daß sogenannte Stickies auftreten. Mit diesen Mischungen können auch nichtverwobene Textilien verklebt werden. Bei Verwendung zum Imprägnieren von Vliesstoffen verfügen diese jedoch über keine Naßfestigkeit und zerfallen im Kontakt mit neutralem Wasser. Aus der EP-A 0 538 625 sind textile Fußbodenbeläge bekannt, die durch Vernadelung einer Rückenschicht auf eine Rohware und Imprägnierung der Rückenschicht mit einer Latex-Dispersion hergestellt werden. Diese Dispersion ist zwar mit Hilfe eines Lösungsmittels aus dem Belag herauslösbar. Ein technisch brauchbares Recycling der Fußbodenbeläge ist damit nicht möglich. Die US-A-3,843,321 beschreibt ein Verfahren, um Fasern aus Vliesstoffen wiederzugewinnen, indem diese mit einer wäßrigen Lösung aus Alkalimetallhydroxyd und einem organischen Lösungsmittel bei erhöhter Temperatur behandelt werden. Dabei werden zwar die Fasern kaum geschädigt, das Bindemittelpolymer wird jedoch vollständig zerstört. Aus der EP-B 0 518 004 ist ein Recyclingverfahren für glasmattenverstärkte Thermoplasten bekannt, bei dem das Material zerkleinert und pulverisiert wird. Das Pulver wird in Mischung mit einem Harz als Härter als Bindemittel für Textilfasern oder Textilvlies verwendet. Aus der EP-A 0 547 533 ist bekannt, bei der Herstellung eines textilen Fußbodenbelags recyclingfähige Komponenten zu verwenden. Als Möglichkeiten für das Recycling werden Zerkleinern, Einschmelzen und erneutes Extrudieren bzw. Depolymerisieren genannt. Aus der EP-A 0 316 676 ist schließlich eine auflösbare Klebefolie bekannt, bei der das aufgelöste Copolymere durch Ansäuern in Form von kleinen Brocken bzw. Klumpen anfällt, die durch einfache mechanische Trennoperation vom wäßrigen System abgetrennt werden.

Der Erfindung liegt die Aufgabe zugrunde, Bindemittel zu schaffen, die die üblicherweise geforderten Eigenschaften erfüllen, jedoch leicht und vollständig von den Fasern entfernt und danach wiederverwendet werden können, so daß sowohl die Fasern als auch die Bindemittel selbst wieder in den ursprünglichen Produktionsprozeß rückgeführt werden können.

Diese Aufgabe wird erfindungsgemäß dadurch gelöst, daß als Bindemittel eine wäßrige Polymerisatdispersion eingesetzt wird, die einen bei Anwendungstemperatur filmbildenden Polymerisatanteil in disperser Verteilung mit der Maßgabe enthält, daß die Gesamtmenge des in der wäßrigen Polymerisatdispersion in disperser Verteilung enthaltenen, bei Anwendungstemperatur filmbildenden Polymerisatanteils bei pH-Änderung des wäßrigen Dispergiermediums in eine wäßrige Polymerisatlösung übergeht. Gemäß einer Ausbildung des erfindungsgemäßen Verfahrens weist der bei Anwendungstemperatur filmbildende Polymerisatanteil der wäßrigen Polymerisatdispersion protische Säuregruppen auf, und seine disperse Verteilung im wäßrigen Medium geht durch Erhöhung des pH-Werts des wäßrigen Mediums in eine wäßrige Polymerisatlösung über. Gemäß einer anderen Ausbildung des erfindungsgemäßen Verfahrens weist der bei Anwendungstemperatur filmbildende Polymerisatanteil der wäßrigen Polymerisatdispersion basische Gruppen, insbesondere Aminogruppen, auf, und seine disperse Verteilung im wäßrigen Medium geht durch Absenkung des pH-Werts des wäßrigen Mediums in eine wäßrige Polymerisatlösung über. Bei einer speziellen Ausbildung der Erfindung ist der bei Anwendungstemperatur filmbildende Anteil wie folgt in radikalisch polymerisierter Form aufgebaut:
A) 50 bis 99 Gew.-% eines oder mehrerer Monomere A ausgewählt aus der Gruppe umfassend (Meth)acrylsäureester, Vinylester, Vinylaromaten, Vinylether, ethylenisch ungesättigte Nitrile, olefinische Kohlenwasserstoffe; und
B) 1 bis 50 Gew.-% eines oder mehrerer wasserlöslicher Monomere B ausgewählt aus der Gruppe umfassend ethylenisch ungesättigte Carbonsäuren, organische ethylenisch ungesättigte Sulfonsäuren, organische ethylenisch ungesättigte Carbonsäureamide, N-Methylolverbindungen von ethylenisch ungesättigten Carbonsäureamiden und Hydroxyalkyl(meth)-acrylate.

Dabei kann der filmbildende Polymerisatanteil unter Zusatz von 0,01 bis 10 Gew.-%, bezogen auf A + B, einer die radikalische Polymerisationsreaktion regelnden Substanz hergestellt werden.

Erfindungsgemäß werden so wäßrige Polymerisatdispersionen als Bindemittel eingesetzt, deren Verfilmungen entweder in alkalischem wäßrigem Medium (bei protische Säuren einpolymerisiert enthaltenden Dispersionspolymerisaten) oder in saurem wäßrigem Medium (bei basische Verbindungen wie z.B. Amine einpolymerisiert enthaltenden Dispersionspolymerisaten) löslich sind und durch pH-Rückstellung der dabei anfallenden wäßrigen Bindemittellösung, sowie gegebenenfalls nach Einwirkung von Maßnahmen zur Aufkonzentration, die Rückerzeugung der Bindemitteldispersion ermöglichen, wodurch das Bindemittel ebenso wie die Fasern wiederverwertbar sind, so daß sich das Problem der Entsorgung der Bindemittellösung nicht mehr stellt.

Die erfindungsgemäßen Bindemittel-Polymerisate, deren Polymerzusammensetzung über einen Mindestanteil an aciden Monomeren verfügen, wurden unter Verwendung eines Polymerisationsreglers erhalten. Dadurch können die Bindemittel sich in wäßriger Umgebung bei pH-Werten von über 9 vollständig auflösen, und der Faserverbundwerkstoff zerfällt dann in die Fasern und eine Bindemittellösung, von welcher die Fasern leicht abfiltriert und in den Produktionskreislauf zurückgeführt werden können. Die basische Bindemittellösung kann als Lösung wieder verwendet werden, auf ursprünglichem pH-Wert zurückgestellt werden oder bevorzugt auch direkt neuem Bindemittel zugeführt werden, um dieses auf eine bestimmte Flottenkonzentration zu verdünnen bzw. einen bestimmten Flotten-pH-Wert einzustellen. Bei Absenkung des pH-Wertes erfolgt normalerweise erneut eine Dispergierung des Polymerisates, d.h. eine Redispergierung zu Dispersion. Diese Redispergierung kann durch Zusatz von weiterem Tensid gefördert werden.

Die erfindungsgemäßen Polymerisate verfügen als Bestandteil der Faserverbundwerkstoffe über hohes Auflösevermögen, welches eine vollständige Abtrennung des Bindemittelpolymerisates von der Faseroberfläche ermöglicht, um möglichst sortenreine Fasermaterialien zurückzugewinnen. Es wurde gefunden, daß ein hoher Anteil an copolymerisierter Säure im Bindemittelpolymerisat das Dispergierverhalten anhebt. Die erfindungsgemäßen Bindemittel verfügen dabei häufig bereits ohne Mitverwendung von vernetzend wirkenden Monomeren, wie z.B. den Additionsprodukten von Formaldehyd an Acrylamid oder Methacrylamid, über hohe Naßreißfestigkeiten, obwohl das Vorurteil bestand, daß die Naßfestigkeit durch den hohen Anteil an hydrophilen Monomeren in den Polymerisaten, die für die Dispergierfähigkeit des Binders notwendig sind, leidet und damit Anfälligkeiten gegen Wasser bzw. Nässe auftreten. Die Naßfestigkeit der Verbundstoffe kann durch Mitverwendung von Hydrophobiermitteln weiter erhöht werden, da diese der Benetzbarkeit durch wäßrige Systeme entgegenwirken. Die erforderliche Naßfestigkeit muß in der Regel mehr als 10 N/50 mm, bevorzugt über 20 N/50 mm, betragen, wenn die Streifenbreite der Proben 50 mm beträgt. Eine hohe Naßfestigkeit wird beispielsweise bei (Papier)Servietten, Hygienetüchern, Einlagen usw. gefordert, die unter Gebrauchsbedingungen teilweise feucht oder naß werden können. Auch Einlagevliesstoffe für Kleidungsstücke, die gewaschen oder chemisch gereinigt werden sollen, werden beim Waschprozeß mechanisch belastet.

Für den Fall, daß das erfindungsgemäß verwendete Bindemittel auch einen nicht filmbildenden Polymerisatanteil enthält, der darüber hinaus nicht in eine wäßrige Lösung überführbar ist, kann dieser entweder auf der Faseroberfläche verbleiben oder nach Trocknung der abgetrennten Faser durch mechanische Einwirkung, z.B. Abklopfen, abgetrennt werden.

Das Weglassen der vernetzend wirkenden N-Methylolverbindungen führt zudem auch zu einer Formaldehydfreiheit und stellt die bevorzugten Ausführungsform dar. Es ist aber natürlich auch möglich, geringe Mengen an selbstvernetzungsfähigen Monomeren mitzuverwenden. Üblicherweise wird hierbei nicht mehr als 1% der genannten N-Methylolderivate mitverwendet, bevorzugt ohne. Ein hoher Anteil an copolymerisierter Säure oder an Vernetzern erhöht den Griff bzw. die Härte des Endmaterials. Ein zusätzliches Absenken des Molekulargewichtes durch Regelung der Polymerisate unterstützt den Dispergiervorgang und reduziert die Härte, vermindert aber auch unerwünschterweise die Naßfestigkeit. Eine verstärkte Naßfestigkeit bei gleichzeitig guter Dispergierbarkeit und hoher Weichheit der Vliesstoffe wird folglich dann erhalten, wenn die Polymerisationsreaktion nur schwach geregelt wird.

Im folgenden werden die erfindungsgemäß bevorzugt als Bindemittel eingesetzten Polymerisate beschrieben.

Als Monomere A werden, bezogen auf die Gesamtmenge der Monomeren, vorzugsweise mit einem Gewichtsanteil von 50 bis 99 Gew.-%, bevorzugt 60 bis 97 Gew.-%, ganz bevorzugt 70 bis 90 Gew.-%, eingesetzt:
a1) Ester der Acryl- und Methacrylsäure, wobei die Acrylsäureester bevorzugt sind.
a2) Ethylenisch ungesättigte Nitrile wie Acryl- und Methacrylsäurenitril, wovon Acrylnitril bevorzugt ist.
a3) Vinylester, wobei Vinylacetat, Vinylpropionat, Vinylester von α-verzweigten Monocarbonsäuren, beispielsweise VeoVa9© oder VeoVa10© , sowie Vinylformamid bevorzugt sind;
a4) Vinylaromaten wie Styrol, Divinylbenzol, wobei Styrol ganz besonders bevorzugt ist;
a5) ungesättigte C₄-bis C₈-Diene wie Ethylen, Propylen, Butadien, Vinylidenchlorid, Vinylchlorid, wovon Butadien besonders gut geeignet ist;
a6) Vinylether wie Vinylmethylether, Vinylethylether, Diethylenglykol-monomethyl-vinylether;

Als Monomere B werden, bezogen auf die Gesamtmenge der Monomeren, vorzugsweise mit einem Gewichtsanteil von 1 bis 50 Gew.-%, bevorzugt 2 bis 40 Gew.-%, ganz bevorzugt 5 bis 30 Gew.-%, solche eingesetzt, die bei 25 °C eine molare Löslichkeit in Wasser von mehr als 0,1 mol/l aufweisen:
b1) ethylenisch ungesättigte Carbonsäuren oder deren Anhydride sowie Sulfon- und Phosphonsäuren wie Acrylsäure, Methacrylsäure, (Meth)Acrylamidoglykolsäure sowie deren Ester und/oder deren Etherderivate, Itaconsäure, Vinylphosphonsäure, Vinylsulfonsäure, Maleinsäureanhydrid und Methacrylsäureanhydrid, Acrylamido-2-methylpropansulfonsäure. Ganz besonders bevorzugt werden Methacrylsäure, Acrylsäure, Itaconsäure und Acrylamidoglykolsäure.
b2) ethylenisch ungesättigte Amide und deren Derivate. Besonders geeignet und bevorzugt sind Acrylamid, Methacrylamid sowie Acrylamidoglykolsäure-alkylester und/oder deren Alkylether. Die N-Methylolderivate des Acrylamides und Methacrylamides werden unter 1 Gew.-%, bevorzugt jedoch ohne sie eingesetzt.
b3) Unter den Hydroxyalkylester der Acryl- und Methacrylsäure sind 2-Hydroxyethylacrylat, 2- und 3-Hydroxypropylacrylat, 4-Hydroxybutylacrylat, 2-Hydroxyethylmethacrylat, 3-Hydroxypropylmethacrylat sowie Umsetzungsprodukte von Mono- und Disacchariden mit Acrylsäure oder Methacrylsäure bevorzugt. Ganz bevorzugt wird jedoch Hydroxyethylacrylat verwendet.
b4) Hydrophile Monomere wie Acrylnitril, Acrolein, Methylvinylketon, Vinylacetat, Methylacrylat, Ethylacrylat, Vinylpropionat sind ebenfalls geeignet und bevorzugt, die Hydrophilie der Polymerisate anzuheben.

Die Monomeren b1) können zum Teil auch in neutralisierter Form eingesetzt werden oder nach erfolgter Polymerisation teilneutralisiert werden, so daß der pH-Wert der Bindemitteldispersion zwischen 1 und 7 liegt.

Als Neutralisationsmittel haben sich neben Ammoniak und anderen Aminen wie Ethanolamin oder Triethanolamin auch basische Salze der Alkali-, Erdalkali- oder auch anderer Metalle wie z.B. Natronlauge, Natriumbicarbonat, Calciumhydroxid, Zinkoxid, Magnesiumoxid oder Natriumpyrophosphat bewährt. Der Zusatz solcher Substanzen zu den erfindungsgemäßen elektrolytstabilen Dispersionen wirkt als Puffer und erhöht die kolloidale Stabilität der Dispersionen bei deren Herstellung, Transport oder Verarbeitung. Zweiwertige Metallionen oder Diamine erhöhen die innere Festigkeit der Polymerisate, senken aber die Wasserfestigkeit stark ab.

Die Monomeren der Gruppen a1 bis a6 sowie b1 bis b4 können jeweils einzeln oder in beliebigen Mischungen eingesetzt werden. Besonders gut als Monomermischung A geeignet sind Kombinationen von Monomeren aus a1) mit a2), a3) und a4) ("Methacrylsäure-Copolymerisate"), wobei a1 bevorzugt mindestens 50 Gew.% der Mischung A ausmacht, oder eine Kombination von a3) mit a1), a4), a5) und a6) ("Vinylester-Copolymerisate"), wobei a3 bevorzugt mindestens 30 Gew.% der Mischung A ausmacht.

Eine geschickte Kombination mit den Monomeren B, die in der Regel über einen hohen Löslichkeitsparameter δ verfügen, erhöht auch den Gesamtlöslichkeitsparameter des Polymerisates und führt zu verstärkter Resistenz gegenüber organischen Lösungsmitteln. Es resultieren Bindemittel, die auch ohne Mitverwendung von N-Methylolverbindungen chemische Reinigungsbeständigkeit aufweisen.

Die Monomeren werden bevorzugt in der Weise kombiniert, daß das resultierende Polymerisat eine Glasübergangstemperatur von -50 bis +130 °C, bevorzugt -40 bis +80 °C, ganz bevorzugt von -30 bis +60 °C aufweist, wobei die Glasübergangstemperatur durch DSC-Messung bestimmt wird. Näherungsweise kann man die Glasübergangstemperatur nach der Methode von T.G. Fox (Bull. Am. Soc., Ser. II, 1 (1956) 123) aus den Glasübergangstemperaturen der Homopolymerisate berechnen, welche in den üblichen Nachschlagewerken tabelliert sind. Die Einstellung einer geeigneten Glasübergangstemperatur ermöglicht die Herstellung unterschiedlicher Anwendungsprodukte. Für thermoverformbare Nadelvlies-Bodenbeläge werden Mischungen aus harten und weichen Dispersionspolymerisaten oder stufenförmige Abfolgen von harten und weichen Polymerisaten bevorzugt.

Bevorzugte Ausführungsformen erfindungsgemäß hergestellter Bindemittel sind:
I) 60 bis 85 Gew.-% n-Butylacrylat oder Ethylacrylat, 5 bis 20 Gew.-% Acrylnitril oder Methylmethacrylat oder Styrol und 10 bis 20 Gew.-% Methacrylsäure oder Acrylsäure.
II) 50 bis 80 Gew.-% n-Butylacrylat, 10 bis 50 Gew.-% Vinylacetat oder Vinylpropionat und 1 bis 30 Gew.-% Methacrylsäure oder Acrylsäure.
III) 30 bis 50 Gew.-% n-Butylacrylat, 30 bis 50 Gew.-% Ethylacrylat und 5 bis 30 Gew.-% Methacrylsäure oder Acrylsäure.
IV) 40 bis 80 Gew.-% Methylmethacrylat, 10 bis 30 Gew.-% n-Butylacrylat oder Ethylhexylacrylat, 10 bis 20 Gew.-% Styrol und 5 bis 30 Gew.-% Methacrylsäure oder Acrylsäure.
V) 50 bis 80 Gew.-% Butadien, 10 bis 30% Gew.-% Styrol und/oder Acrylnitril, 5 bis 30 Gew-% Methacrylsäure.

Als Polymerisatioraregler für die radikalische Polymerisation kommen alle gebräuchlichen Reglertypen in Frage. Inbesondere seien genannt:
r1) Lineare oder verzweigte, aliphatische oder auch aromatische Mono- oder Polythiole, die gegebenenfalls weitere, hydrophilierende Gruppen enthalten können, wovon tert-Dodecylmercaptan, Tris(methoxy)silylpropanthiol (MTMO) und Thioethanol bevorzugt sind.
r2) Andere Schwefel-Verbindungen wie Disulfide oder Xanthogenate, Cystein und Cysteinsäureester.
r3) Thioglykolsäure und deren Derivate wie die Ammonium- oder Alkalimetallsalze oder deren Ester, wie der Ethylester, 2-Ethylhexylester, Allylester oder Benzylester. Ganz bevorgzugt ist der 2-Ethylhexylester der Thioglykolsäure.
r4) Halogenverbindungen wie Bromtrichlormethan, Tetrabrommethan oder Tetrachlormethan oder andere bromhaltige Derivate des Ethans, Propans oder Butans. Bevorzugt wird Bromtrichlormethan verwendet.
r5) Allylverbindungen sind ebenfalls gut geeignet. Es kommen insbesondere Allylalkohol, Butenol, Butendiol, Itaconsäure, Diallylphthalat, Triallylcyanurat, Diallylether, Allylsulfobernsteinsäureester, Allyl-(meth)acrylat in Frage, wovon inbesonders die niedermolekularen Vertreter wie Allylalkohol, Butenol und Butendiol bevorzugt werden.
r6) Ganz bevorzugt sind Glykolderivate, inbesonders deren höhermolekulare Oligomere, da sie in der Regel eine Doppelfunktion übernehmen. Geeignete Vertreter dieser Klasse sind Polyethylenglykol, Polyethylenglykol-mono-alkylether und -bis-alkylether, Polyethylenglykol-mono-alkylethersulfate oder -phosphate, Polyethylenglykol-mono-arylether, Polyethylenglykol-mono-arylethersulfate oder -phosphate, bei denen ggf. ein Teil des Ethylenoxi-Monomeren auch durch Propylen- oder Butylenoxi-Monomer ersetzt sein kann. Die Alkylgruppen sind lineare oder verzweigte, gesättigte oder ungesättigte C₁-C₂₀-Reste verstanden. Derartige Verbindungen wirken nicht nur als Polymerisationsregler sondern auch als Emulgiermittel und werden daher in der Regel bereits aus diesem Grund mitverwendet. Durch geschickte Kombination mit anderen, nicht regelnden Emulgiermitteln, wie z.B. Laurylsulfat, kann ein geeigneter Regeleffekt bei genügender kolloidaler Stabilität eingestellt werden. Besonders bevorzugte Vertreter dieser Polymerisationsregler sind neutralisierte Fettalkoholpolyethylenoxidsulfate mit C₁₂-C₁₈-Alkylresten und 2 bis 60 Mol Ethylenoxid (EO) oder den nicht sulfatierten Vertretern oder auch die Alkylarylpolyethylenoxide bzw. die zugehörigen sulfatierten Varianten mit C₆-C₁₂-Alkylresten und 2-60 Mol EO.
   Auch Glykol oder Diethylenglykol oder auch deren niedere Alkylether sowie den cyclischen Derivaten wie Dioxan können zur Polymerisationsreaktion zugesetzt werden. Niedermolekulare monofunktionelle Alkohole wie Ethanol, n-Propanol, iso-Propanol, n- und iso-Butanol eignen sich auch als regelnde Substanzen. Sie wirken einerseits als Filmbildehilfsmittel, andererseits auch, um die Gefrier-Tau-Stabilität zu erhöhen und werden bereits zu diesem Grund häufig zugesetzt.
r7) Aldehyde, wie Acetaldehyd, Propionaldehyd, Benzaldehyd oder bevorzugterweise Acrolein.
r8) Hypophosphorige Säure und deren Salze, wovon Natriumhypophosphit bevorzugt ist.

Die Herstellung der (Meth)Acrylsäureester-Copolymerisate oder der Vinylester-Copolymerisate erfolgt vorzugsweise nach dem Emulsionspolymerisationsverfahren. Die Polymerisation kann kontinuierlich oder diskontinuierlich, mit und ohne Verwendung von Saatlatices, unter Vorlage aller oder einzelner Bestandteile des Reaktionsgemisches, oder unter teilweiser Vorlage und Nachdosierung der oder einzelner Bestandteile des Reaktionsgemisches, oder nach dem Dosierverfahren ohne Vorlage durchgeführt werden. Alle Dosierungen erfolgen vorzugsweise im Maße des Verbrauches der jeweiligen Komponente. Die Teilchengröße der Polymerdispersionen kann einheitlich (monomodal) eingestellt sein oder in Form einer breiten Verteilung oder einer bi- oder polymodalen Verteilung vorliegen. Der Polymeranteil beträgt vorzugsweise 30 bis 70 Gew.-%, bevorzugt 40 bis 68 Gew.-%, ganz bevorzugt von 45 bis 65 Gew.-% und kann vor Gebrauch auf eine für das Applikationsverfahren geeignete Konzentration verdünnt bzw. mit den üblichen Verdickungsmitteln auf eine bestimmte Verarbeitungsviskosität eingestellt werden.

Ganz bevorzugt zum Polymerisationsverfahren ist eine Monomeremulsionszufuhr, bei der die Monomeren auch ggf. auf zwei oder mehr als zwei sich in ihrer Zusammensetzung unterscheidenden Einzelemulsionen verteilt werden können, die der Polymerisationsreaktion zeitlich aufeinanderfolgend zugeführt werden. Dabei entstehen Stufenpolymerisate mit beispielsweise Kern-Schale-Aufbau. Derartige Polymerisate sind bevorzugt, da die Anreicherung der hydrophilen Monomeren in der Schale den Dispergierprozeß des späteren Bindemittels unterstützt. Es wurde gefunden, daß bereits eine einstufige Fahrweise den Dispergierprozeß der Polymerisate ausreichend gut ermöglicht, wenn bei der Wahl der Monomeren A und B bereits für einen ausreichend hohen Unterschied in Hydrophilie gesorgt wird. Wird aus bestimmten Gründen jedoch eine zweistufige Fahrweise vorgezogen, so können die Stufen nacheinander erfolgen oder sich überschneiden oder auch mit überscheidendem Gradienten zugegeben werden.

Eine besondere Form der Stufenfahrweise liegt vor, wenn zur Kontrolle der Teilchengröße eine Saat mitverwendet wird. Die Polymerzusammensetzung der Saat kann beliebig gewählt werden.

Die Dispersion kann auch in Form einer Sekundärdispersion hergestellt werden. Hierzu wird die Monomermischung in einem Lösungsmittel wie Hexan, Toluol, n-Butanol, Glykol, oder Tetrahydrofuran in Lösung polymerisiert und danach in Wasser dispergiert.

Für verschiedene Anwendungen haben sich härtere Varianten, die über mehr thermoplastischeres Verhalten verfügen, bewährt. Dies kann durch Veränderung der Monomerkombination oder durch Kern-Schale-Aufbau oder durch Mischen verschiedener Polymerdispersionen erfolgen. Es hat sich bewährt, der normalen Bindemitteldispersion eine zweite Dispersion, eine sogenannte "Hartkomponente", beizumischen. Bevorzugterweise ist die Hartkomponente, um möglichst hohe Verträglichkeit zu erzeugen, ebenfalls aus den Monomeren A und B aufgebaut. Sie unterscheidet sich jedoch hinsichtlich der Glasübergangstemperatur, die bevorzugt um mindestens 20 °C höher ist als die der "Weich-" oder Matrixkomponente. Aufgrund des Anteiles an hydrophilen Monomeren kann auch das Polymerisat der Hartkomponente während des Recycling-Prozesses erneut dispergiert werden. Es ist jedoch keinesfalls die vollständige Redispergierung der härteren Komponente erforderlich. Es genügt vielmehr, daß sich das leichter verfilmende Matrixpolymer auflöst. Durch Zusatz von Filmbildehilfsmitteln zu der Hartkomponente kann deren Verfilmungsbereitschaft in der Mischung beeinflußt werden. Die Hartkomponente und die Weichkomponente werden im Verhältnis 10:1 bis 1:10, bevorzugt 4:1 bis 1:4 und ganz bevorzugt 2:1 bis 1:2 miteinander vermischt. Das resultierende Bindemittel verfügt über ausgezeichnetes thermoplastisches Verhalten und wird zur Herstellung von heißverformbarer Teile verwendet.

Zur Herstellung der Dispersionen werden bevorzugt anionische oder nichtionische Emulgiermittel oder Mischungen hiervon eingesetzt. Besonders bevorzugt sind hierbei die gängigen, dem Fachmann wohlbekannten Emulgiermittel wie ethoxilierte Fettalkohole oder Alkylphenole, deren Alkali- oder Ammoniumsalze der sulfatierten, phosphatierten oder sulfonierten Produkte; neutralisierte Alkyl- oder Alkylarylsulfonate, Sulfobernsteinsäureester ethoxilierter oder nicht ethoxilierter Alkohole, sulfonierte Alkyldiphenyloxide; Alkyl(poly)-glucoside, Blockcopolymere mit Polyether-oder Polyacrylsäure- oder Polymethacrylsäure-Blöcken als hydrophilen Block, Schutzkolloide oder säurehaltige Pfropfcopolymerisate. Als Emulgiermittel wird bevorzugt ein anionisches oder eine Mischung aus anionischem und nichtionischem Emulgiermittel in Gesamtmengen von 0,1 bis 10 bezogen auf die Gesamtmonomermasse eingesetzt. Schutzkolloide werden vorzugsweise in Mengen bis zu 40 Gew.-% bezogen auf Monomermasse eingesetzt. Beispiele hierfür sind Vinylalkohol-Vinylacetat-Copolymerisate mit einem Vinylalkoholanteil von über 80%, Polyvinylpyrrolidon, Poly(alkylmethacrylat-b-Polymethacrylsäure), Celluloseether oder Stärke. Emulgiermittel oder Schutzkolloide können beliebig und wahlweise auf Vorlage, Monomeremulsion oder zur Nachstabilisierung zugesetzt werden.

Die Polymerisate werden durch radikalische Polymerisation erhalten. Zur Herstellung der Polymerisate haben sich wasserlösliche Initiatoren wie die Alkalipersulfate oder Ammoniumpersulfat oder die entsprechenden Perphosphate gut bewährt. Weiterhin können auch Hydroperoxide wie Wasserstoffperoxid, tert-Butylhydroperoxid, Cumolhydroperoxid und andere eingesetzt werden. Bevorzugt wird ihr Einsatz in sogenannten Redoxinitiatorsystemen, ggf. in Gegenwart von Metallionen. Beispiele für reduzierende Komponenten in den Redoxsystemen sind die Alkalimetallsalze der Hydroxymethinsulfinsäure, Natriumbisulfit, Natriumacetonbisulfit, Natriumthiosulfat, Ascorbinsäure, Isoascorbinsäure, Hydroxyaceton, 2-Hydroxycyclopentanon, Formamidinsulfinsäure, Ameisensäure und Natriumborhydrid. Die Redoxinitiierung läuft besonders gut in Gegenwart geringer Mengen an Metallsalzen, die leicht in der Lage sind, ihre Wertigkeit zu verändern, wie z.B. Eisen-II-sulfat, Cer-IV-nitrat oder Kobalt-II-Sulfat.

Die Polymerisationstemperatur kann je nach gewähltem Initiierungssystem zwischen 5 und 95 °C liegen. Diese Initiierungssysteme können auch nach Ende der sogenannten Hauptpolymerisation, bei der mindestens 98% der Monomeren umgesetzt sind, ein weiteres Mal angewendet werden, um den Anteil der Restmonomeren nochmals abzusenken. Bevorzugt zur Nachbehandlung wird jedoch ein von der Erstinitiierung verschiedenes System eingesetzt. Es werden in der Regel niedrige Restmonomeranteile, d.h. unter 100 ppm Gesamtrestmonomeranteile, erhalten, worin bei Anwendung eines Natriumacetonbisulfit als Reduktionsmittel umfassenden Redoxinitiatorsystemes auch der Anteil an Rest-Acrylsäure oder Rest-Methacrylsäure enthalten ist.

Die erfindungsgemäßen Polymerisate verfügen aufgrund der gewählten Kombination aus hydrophilen und hydrophoben Monomeren und der Polymerisation in Gegenwart regelnden Polyetheremulgatoren über ausgeprägte Elektrolytbeständigkeit und können ohne Rückstandbildung über Düsen versprüht werden.

Verfilmungen dieser Dispersionen lassen sich nach Trocknung leicht in alkalischen Medien wieder auflösen. Auch wenn die Polymerisate als Bindemittel zum Verfestigen von Vliesstoffen eingesetzt wurden, diese nach Trocknung und Gebrauch des Vlieses mit Alkalien behandelt werden, löst sich das Bindemittel heraus und der resultierende Faserbrei kann filtriert und zurückgewonnen werden. Das wäßrige Filtrat wird bevorzugt neuem Bindemittel zur Flotteneinstellung beigegeben, kann aber bei Bedarf konzentriert, neutralisiert oder nach Tensidzusatz häufig wieder dispergiert werden. Es wurde kein Unterschied zwischen filtratfreiem und filtrathaltigem Bindemittel hinsichtlich der Vlieseigenschaften oder dessen Recyclingfähigkeiten festgestellt.

Die Eigenschaft, daß sich die Bindemittel im Alkalischen vollständig aufzulösen vermögen, macht die Polymerisate auch als Schlichtemittel für Garne oder als Bindemittel für die Papierherstellung geeignet. Die erfindungsgemäßen Polymerisate eignen sich ferner auch als temporäre oder wiederentfernbare Beschichtungsmaterialien für Holz, Leder, Textilien, Kunststoffe oder Metall.

Als Vliesfasern können alle für die Vliesstoffherstellung üblichen Fasermaterialien verwendet werden. Dies sind neben synthetischen Fasern wie Viskose, Polyester-, Polyamid-, Polypropylen-, Polyacrylnitril-, Carbonfasern oder Fasern von Homo- und Copolymerisaten des Vinylchlorides oder Tetrafluorethylens auch Fasern natürlichen Ursprungs wie Zellstoff-, Zellwolle-, Cellulose-, Baumwolle- oder Holzfasern oder auch Glas-, Keramik-, oder Mineralfasern oder Mischungen hiervon. Bevorzugte Fasermaterialien für disposables sind PES- oder Zellwoll- oder Zellstoffasern oder PES/Zellstoffmischfasern, für Nadelvliese hingegen Mischungen aus Polyester und Polypropylen oder Polyamid-Fasern.

Das Mengenverhältnis Faser/Binder kann je nach der gewünschten Anwendung zwischen 1:2 und 50:1 (Gewichtsanteile) liegen, für die meisten Anwendungen liegt das Faser/Binder-Verhältnis zwischen 1:1 und 10:1.

Den erfindungsgemäßen Dispersionen können auch noch Additive wie Weichmacher, Entschäumungsmittel, Substanzen zur pH-Wert-Regulierung, externe Vernetzungsmittel wie Melamin-Formaldehyd- oder Harnstoff-Formaldehydharze, Flammschutzmittel, Netzmittel, Pigmente, Verdickungsmittel, Gleitmittel, Frostschutzmittel, Farbstoffe, Parfüme usw. , die dem Fachmann wohlbekannt sind, ohne Einbuße der charakteristischen Eigenschaften zugesetzt werden.

Durch Zusatz von Hydrophobierungsmitteln kann die bereits gute Naßfestigkeit der unvernetzten und daher dispergierfähigen Polymerisate weiter gesteigert werden. Die Verwendung von Hydrophobiermitteln auf Basis von fluororganischen Verbindungen oder Siliconverbindungen in der Bindemitteldispersion oder auf dem gebundenem Vliesstoff, d.h. auf der Oberfläche des Faser-Binder-Verbundes, bringt eindringendem Wasser einen Widerstand entgegen und verhindert ein Anlösen oder Anquellen des Bindemittel-Polymerisates. Als besonders gut bewährt haben sich copolymerisierbare fluorierte Monomere, die zur Copolymerisation mitverwendet werden oder copolymerisierbare Siliconverbindungen, wie acrylatmodifizierte Silicone, z.B. die Tegomer-Typen® (Goldschmidt AG). Bevorzugt aber werden Hydrophobiermittel auf Basis von wäßrigen Lösungen neutralisierter Perfluorcarbonsäuren oder wäßrigen Dispersionen von fluororganischen Polymeren nachträglich durch Flottenimprägnierung oder durch Aufsprühen auf das gebundene Vlies aufgebracht und getrocknet.

Die Vliesstoffherstellung erfolgt gemäß den allgemein bekannten Verfahren durch Badimprägnieren, Schaumimprägnieren, Besprühen, Pflatschen, Schaumplatschen, Rakelauftrag oder Bedrucken des Faservlieses mit der Dispersion, wobei die Dispersion eventuell mit Wasser verdünnt oder aber mit den üblichen Verdickungsmitteln verdickt wird, um eine bestimmte Verarbeitungsviskosität einzustellen. Der Vliesbehandlung mit der Dispersion schließt sich im allgemeinen eine Trocknung und Temperung und ggf. die Hydrophobierung des erhaltenen Vliesstoffes an. Die Trocknungsbedingungen hängen von der Art des eingesetzten Trockners ab, üblicherweise liegt die Trocknungstemperatur zwischen 100 und 230 °C, und die Trocknung bzw. Temperung wird zwischen einigen Sekunden und mehreren Minuten durchgeführt.

Die Dispersion wurde folgenden Prüfmethoden unterzogen: Die Lichtdurchlässigkeit der Dispersion wird bei einer Konzentration von 0,01% und einer Schichtdicke von 25 mm bei 25 °C durchgeführt und liefert ein qualitatives Maß für die Teilchengröße. Die Teilchengrößen wurden in einem Malvern Autosizer gemessen, der Feststoffanteil gravimetrisch bestimmt und die Restmonomerenanteile in einem Gaschromatographen. Die Oberflächenspannung wurde an einem Ringtensiometer, Marke Lauda, Typ TE1C, gemessen und die Bestimmung der Viskosität erfolgte in einem Contraves-Rotationsviskosimeter der Fa. Centronics, mit DIN-Becher, Typ III, bei 250 s⁻¹ und 25°C und ist in mPa·s angegeben (DIN 53019). Die Molekulargewichte wurden durch Ausschlußchromatographie (GPC) bestimmt. Als Standard dienten geeichte Polystyrol-Referenzverbindungen, als Lösungsmittel Tetrahydrofuran (THF). Angegeben ist die Molmasse am Peak-Maximum (Mp) oder das gewichtsmittlere Molekulargewicht (M_{w}) in g/mol.

An den gebundenen Vliesstoffen wurden folgende Untersuchungen durchgeführt:

### a) Reißkraft (RK) im trockenen und nassen Zustand

Aus den Vliesstoffen wurden 50 mm breite Streifen geschnitten und diese bei einer freien Einspannlänge von 10 cm im trockenen und im wassernassen Zustand zur Ermittlung der Reißfestigkeit in Analogie zur DIN 53 857 einem Streifenzugversuch ausgesetzt. Die Ergebnisse sind in N pro 50 mm angegeben. Ein gut geeignetes Bindemittel verleiht eine Naßfestigkeit von mehr als 20 N/50 mm.

### b) Biegeversuch (BV)

Die Vliesstoffproben (70 x 30 mm) wurden zur Ermittlung der Biegesteifigkeit, welche als Maß für die Weichheit herangezogen wird, um einen metallenen Dorn gebogen. Als Biegesteifigkeit wurde dabei die Kraft gemessen, die für das Biegen aufzuwenden war, und diese ist in mN angegeben.

### c) Hydrophobie (Hy)

Die Vliesstoffhydrophobie wurde nach ISO 811 bestimmt und ist in cm Wassersäule angegeben.

### d) Redispergierung (RD)

Die Bestimmung des Redispergierungsgrades erfolgt an Vliesstoff-Proben (0,3 g), die 2 h bei Raumtemperatur in einer Natronlauge-Lösung von pH = 11, welche 1 Gew-% an Bis(2-ethylhexyl)sulfobernsteinsäureester oder eines ethoxilierten Alkylphenoles als Netzmittel enthielt, mit Hilfe eines Magnetrührers gerührt wurde. Nach Abfiltrieren und Trocknen der Fasern wurde der Binderverlust bestimmt und in % des ursprünglichen Auftrages angegeben. Vor Wägung des Vliesstoffes bzw. der Fasern wurden diese 24 h klimatisiert. Ein Binderverlust von über 50% ist für die meisten Anforderungen notwendig.

### e) Prüfung der Auflösbarkeit der Dispersion oder der Redispergierung des Dispersionsfilmes (RDF)

0,5 g Dispersion werden mit 30 ml 1N Natronlauge verdünnt und 3 h bei 50 °C gehalten. Danach wird das Aussehen der Lösung visuell auf Transparenz beurteilt.

Eine Probe der Dispersion wurde bei Raumtemperatur verfilmt und 2 Tage an der Luft trocknen gelassen. Ein 1 cm² großes Filmstück (Dicke ca. 0,5 mm) wurde in 100 ml 0,1N Natronlauge 2 h gerührt, ungelöste Bestandteile abfiltriert und gewogen. Die wäßrige Lösung wurde mit verdünnter Salzsäure angesäuert und die Lösung bei Erreichen eines pH-Wertes von ca. 3 beurteilt.

Folgende Emulgatoren wurden eingesetzt:
- Emulgator 1:: 30%ige wäßrige Lösung eines neutralisierten, sulfatierten C₁₂-Fettalkoholethoxilates (EO-Grad ca. 30)
- Emulgator 2:: 20%ige wäßrige Lösung eines ethoxilierten Talgfettalkoholes (EO-Grad ca. 30)
- Emulgator 3:: 40%ige Lösung eines Gemisches aus neutralisiertem C₁₂- bis C₁₄-Alkylsulfonates
- Emulgator 4:: 35%ige wäßrige Lösung eines neutralisierten, sulfatierten Octylphenolethoxilates (EO-Grad ca. 25)
- Emulgator 5:: 28%ige Lösung eines neutralisierten, sulfatierten C₁₂-Fettalkoholethoxilates (EO-Grad 3)

Gewichtsangaben sind in Gew.-%. Die Angaben beziehen sich, wenn nicht anders angegeben, auf Gesamtmasse Monomere.

Anhand der im folgenden beschriebenen Beispiele soll die Erfindung noch näher erläutert werden.

### 1. Säurereiche Polymerisate

### Beispiel 1.1:

Ein Gemisch aus 600 g Wasser, 3 g Emulgator 3 und 80 g einer Monomeremulsion D1.1 wurden auf 85 °C erhitzt und mit 60 g einer Lösung von 12 g Natriumperoxodisulfat in 370 g Wasser auf einmal versetzt. Der Rest der Monomeremulsion wird in 120 min, der Rest der Initiator-Lösung in 135 min kontinuierlich zugegeben und 120 min bei dieser Temperatur gehalten, auf 30 °C abgekühlt und mit 0,2% bezogen auf die Monomermasse einer wäßrigen Lösung von tert.-Butylhydroperoxid und Ascorbinsäure versetzt. Es wurde eine koagulatfreie, ca. 50 Gew.-%ige Dispersion mit einem Restmonomer-Anteil in Summe von ca. 90 ppm erhalten.

Die Molmasse Mp des Polymerisates betrug 160.000 g/mol (GPC).

| *Zusammensetzung von D1.1:* | |
|---|---|
| 1170 g [78%]* | n-Butylacrylat |
| 450 g [7%] | Acrylnitril |
| 225 g [15%] | Methacrylsäure |
| 2 g | Natriumvinylsulfonat, 25%ige wäßrige Lösung |
| 15 g | Emulgator 3 |
| 480 g | Wasser |

| | |
|---|---|
| *Die Angaben in Klammern beziehen sich auf die reine Monomerzusammensetzung. | |

Die Dispersion löst sich in verdünnter Natronlauge zu einer transparenten Lösung auf (Prüfung e).

### Beispiel 1.2:

Beispiel 1.1 wird mit dem Unterschied wiederholt, daß im Monomerzulauf Thioglykolsäure-(2-ethylhexyl)ester als Polymerisationsregler zugesetzt wird. Die Molmasse Mp des Polymerisates betrug 52.000 g/mol (GPC).

### Beispiel 1.3:

### Beispiel 1.1. wird mit dem Unterschied wiederholt, daß 16,7% Acrylsäure anstelle der Methacrylsäure copolymerisiert werden.

### Beispiel 1.4:

### Beispiel 1.1. wird mit dem Unterschied wiederholt, daß der Zulauf noch 75 g Emulgator 2 zusätzlich enthielt.

### Beispiel 1.5:

Ein Gemisch aus 600 g Wasser und 45 g einer Monomeremulsion D1.5 wurden auf 85 °C erhitzt und mit 15 g einer Lösung von 7.5 g Natriumperoxodisulfat in 290 g Wasser auf einmal versetzt. Nach 15 min wurde der Rest der Monomeremulsion D1.5 in 120 min und der Rest der Initiator-Lösung in 135 min zugegeben und weitere 60 min bei dieser Temperatur gehalten. Nach Abkühlen auf Raumtemperatur wird jeweils mit 0,2% bezogen auf die Monomermasse einer wäßrigen Lösung von t-Butylhydroperoxid und Isoascorbinsäure versetzt. Es wurde eine koagulatfreie, ca. 50 Gew.-%ige Dispersion mit ca. 60 ppm an restmonomeren Acrylestern erhalten.

| *Zusammensetzung von D1.5:* | |
|---|---|
| 900 g [60%] | n-Butylacrylat |
| 450 g [30%] | Methylacrylat |
| 150 g [10%] | Methacrylsäure |
| 75 g | Emulgator 1 |
| 37.5 g | Emulgator 2 |
| 530 g | Wasser |

### Beispiel 1.6:

Beispiel 1.5 wird jeweils mit dem Unterschied wiederholt, daß im Monomerzulauf zusätzlich 0,7 Gew.-% Thioglykolsäure-(2-ethylhexyl)ester als Polymerisationsregler zugesetzt wird.

Die Ergebnisse der vorstehend beschriebenen Versuche sind in der folgenden Tabelle 1 zusammengestellt.

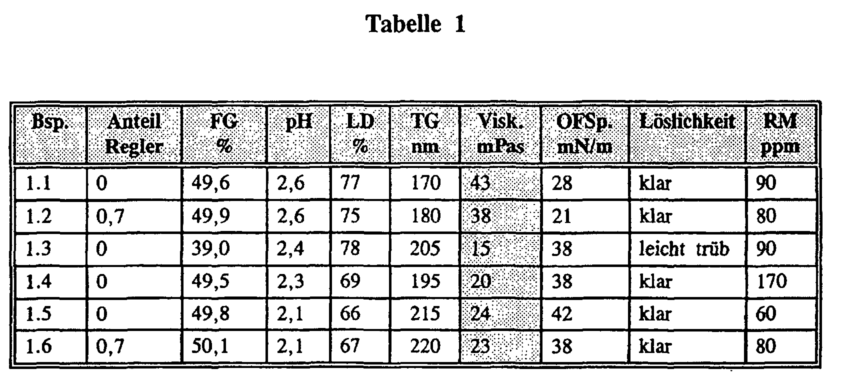

### 2. Spezielle Systeme

### Beispiel 2.1:

Eine Dispersion mit der Monomerzusammensetzung 50% n-Butylacrylat, 48% Methylacrylat und 2% Acrylsäure wurde analog der Vorschrift aus Beispiel 1.5 hergestellt, mit Natronlauge auf pH = 4,3 gestellt und zur Imprägnierung von Vliesstoffen eingesetzt.

### Beispiel 2.2:

Eine Dispersion mit der Monomerzusammensetzung 60% n-Butylacrylat, 38% Vinylacetat und 2% Acrylsäure wurde analog der Vorschrift aus Beispiel 1.5 hergestellt und mit Natronlauge auf pH = 4,3 gestellt. Die Molmasse Mp des Polymerisates betrug 96.000 g/mol (GPC).

### Beispiel 2.3:

Eine Dispersion mit der Monomerzusammensetzung 83% Ethylacrylat, 15% n-Butylacrylat und 2% Acrylsäure wurde analog der Vorschrift aus Beispiel 1.5 hergestellt und mit Natronlauge auf pH = 4,3 gestellt.

### Beispiel 2.4:

Eine Dispersion mit der Monomerzusammensetzung 58% n-Butylacrylat, 40% Vinylpropionat und 2% Acrylsäure wurde analog der Vorschrift aus Beispiel 1.5 hergestellt.

### Beispiele 2.5, 2.7 und 2.8:

Beispiele 2.1, 2.3 und 2.4 wurden mit dem Unterschied wiederholt, daß in Gegenwart von 0.7% bezogen auf Monomer des Reglers Thioglykolsäure-(2-ethylhexyl)ester polymerisiert wurde.

### Beispiel 2.6:

Beispiel 2.2 wurde mit dem Unterschied wiederholt, daß in Gegenwart von 0.7% bezogen auf Monomer des Reglers Thioglykolsäure-(2-ethylhexyl)ester polymerisiert wurde. Die Molmasse Mp des Polymerisates betrug 46.000 g/mol (GPC).

### Beispiel 2.9:

Beispiel 1.5 wird mit unter Verwendung der Monomeremulsion D2.9 wiederholt. Nach vollständiger Monomerzugabe wird weitere 60 min bei Polymerisationstemperatur (90 °C) gehalten, abgekühlt und mit 0,3% tert-Butylhydroperoxid versetzt. Zu der gerührten Mischung wird eine Lösung aus 4 g Natriumdisulfit in 30 g Wasser und 5 g Aceton in 30 min zudosiert. Es wird eine koagulatfreie Dispersion mit einem pH-Wert von 2,1 und 70 ppm Restmonomeren erhalten.

| *Zusammensetzung von D2.9:* | |
|---|---|
| 660 g [44%] | n-Butylacrylat |
| 450 g [30%] | Ethylacrylat |
| 150 g [10%] | Styrol |
| 225 g [15%] | Methacrylsäure |
| 15 g [1%] | Acrylamidoglykolsäure |
| 7 g | tert-Dodecylmercaptan |
| 65 g | Emulgator 4 |
| 75 g | Emulgator 2 |
| 480 g | Wasser |

### Beispiel 2.10:

Ein Gemisch aus 670 g Wasser, 2,1 g Emulgator 3, 0,9 g Natriumvinylsulfonat und 22 g einer Monomeremulsion A wurden auf 85 °C erhitzt und mit 6,0 g Natriumpersulfat versetzt. Nach 15 min wird der Rest der Monomeremulsion A in 60 min und 4,8 g Natriumpersulfat als 4,6 Gew.-%ige Lösung in 70 min zugegeben. Danach wird bei 60 °C mit Ammoniak auf pH = 5 gestellt und Monomeremulsion B in 60 min sowie eine Reduktionsmittellösung, bestehend aus 2,4 g Ascorbinsäure und 20 mg Eisen-II-sulfat in 100 g Wasser, in 75 min zugegeben. Nach Abkühlen wird mit 0,2% bezogen auf Monomere mit tert-Butylhydroperoxid und Ascorbinsäure nachbehandelt. Es wurde ein koagulatfreie Dispersion mit einem pH-Wert von 3,3 und einem flüchtigen Restmonomerenanteil von 50 ppm erhalten.

| *Zusammensetzung von Monomeremulsion A:* | |
|---|---|
| 396 g [33%] | n-Butylacrylat |
| 84 g [7%] | Acrylnitril |
| 120 g [10%] | Methacrylsäure |
| 9 g | Emulgator 3 |
| 0,2 g | Natriumvinylsulfonat |
| 18 g | Thioglykolsäure-(2-ethylhexyl)ester |
| 485 g | Wasser |

| *Zusammensetzung von Monomeremulsion B:* | |
|---|---|
| 360 g [30%] | Methacrylsäureanhydrid |
| 180 g [15%] | n-Butylacrylat |
| 60 g [5%] | Methacrylsäure |
| 9 g | Emulgator 3 |
| 0,2 g | Natriumvinylsulfonat |
| 460 g | Wasser |

### Beispiel 2.11:

Beispiel 1.5 wird mit unter Verwendung der Monomeremulsion D2.11 wiederholt. Nach vollständiger Monomerzugabe wird weitere 60 min bei Polymerisationstemperatur (82 °C) gehalten und jeweils 0,1% tert-Butylhydroperoxid und 0,1% einer Lösung von Natriumhydroxymethylsulfinsäure zudosiert. Es wird eine koagulatfreie Dispersion mit einem pH-Wert von 2.6 und 90 ppm Restmonomeren erhalten. Die Molmasse Mp des Polymerisates betrug 115.000 g/Mol (GPC).

| *Zusammensetzung von D2.11:* | |
|---|---|
| 660 g [75%] | n-Butylacrylat |
| 45 g [3%] | Hydroxyethylacrylat |
| 105 g [7%] | Acrylnitril |
| 225 g [15%] | Methacrylsäure |
| 5 g | tert-Dodecylmercaptan |
| 90 g | Emulgator 4 |
| 820 g | Wasser |

### Vergleichsbeispiel 2.12:

Ein Gemisch aus 600 g Wasser, 3.5 g Wasserstoffperoxid und 45 g einer Monomeremulsion D2.12 wurden auf 60 °C erhitzt und mit 10 g einer Lösung von 3 g Ascorbinsäure und 20 mg Eisen-II-sulfat in 200 g Wasser versetzt. Danach wurde der Rest der Monomeremulsion in 120 min und der Rest der Reduktionsmittel-Lösung in 135 min kontinuierlich zugegeben. Nach beendeter Zufuhr wurde weitere 90 min bei dieser Temperatur gehalten, abgekühlt und jeweils mit 0,2% bezogen auf die Monomermasse einer wäßrigen Lösung von tert-Butylhydroperoxid und Ascorbinsäure versetzt.

| *Zusammensetzung von D2.12:* | |
|---|---|
| 1500 g [94%] | Ethylacrylat |
| 63,6 g [4%] | Acrylamidoglykolsäure |
| 31,8 g [2%] | Acrylsäure |
| 80 g | Emulgator 1 |
| 40 g | Emulgator 2 |
| 520 g | Wasser |

### Vergleichsbeispiel 2.13:

Analog Beispiel 1.5 wird zu einem Gemisch aus 530 g Wasser und 17 g einer Lösung aus 8 g Natriumpersulfat in 110 g Wasser bei 85 °C Monomeremulsion D2.13 in 120 min und der Rest der Initiatorlösung bei 135 min zugegeben. Nach einer weiteren Stunde wird mit jeweils 0,1% tert-Butylhydroperoxid und Natriumhydroxymethylsulfinsäure nachbehandelt. Es wurde eine koagulatfreie, 50 Gew.-%ige Dispersion mit einem Restmonomeranteil von 40 ppm erhalten.

| *Zusammensetzung von D2.13:* | |
|---|---|
| 1380 g [92%] | n-Butylacrylat |
| 45 g [3%] | Acrylnitril |
| 300 g [3%] | N-(Hydroxymethyl)-methacrylamid, 15 %ige Lösung |
| 30 g [2%] | Acrylsäure |
| 90 g | Emulgator 4 |
| 560 g | Wasser |

### Vergleichsbeispiel 2.14:

### Beispiel 1.1. wird wiederholt. Nach Fertigstellung werden 22% der copolymerisierten Säuregruppen mit Calciumhydroxid neutralisiert.

In der folgenden Tabelle 2 sind die Zusammensetzung und die Dispersionsdaten der Beispiele 2.1-2.13 zusammengestellt.

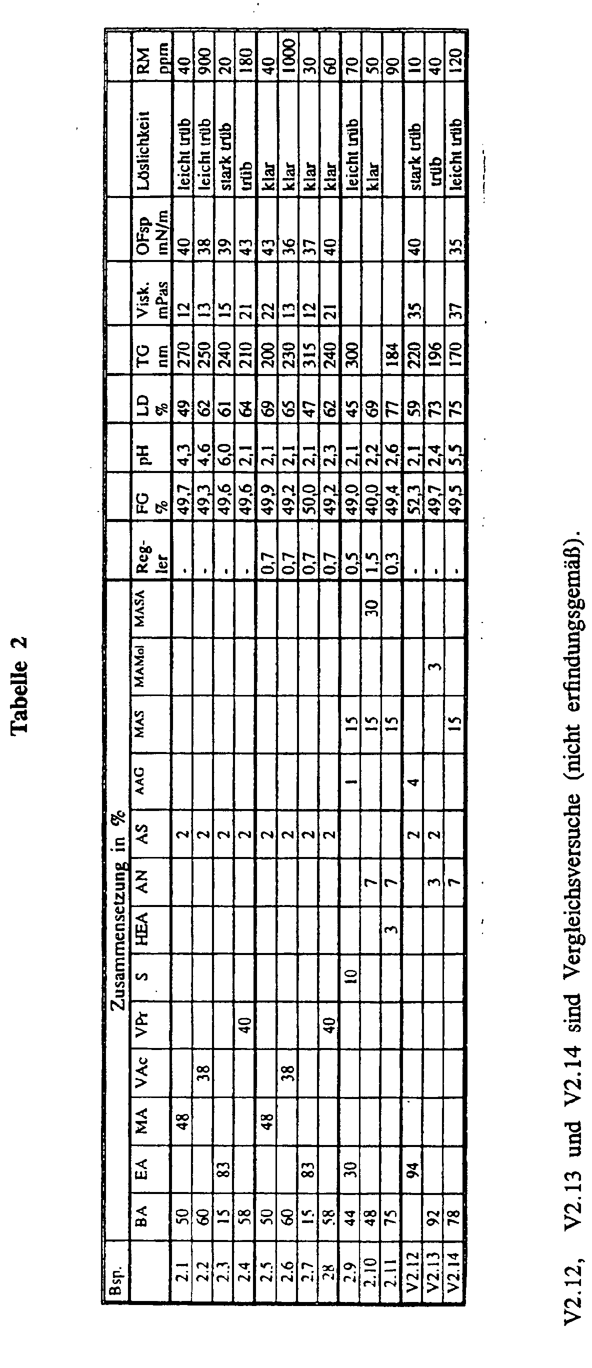

### 3. Herstellung von Vliesstoffen und Prüfung

### Beispiel 3:

Ein längsgelegtes (Faserorientierung bevorzugt in einer Richtung, der Längsrichtung) Faservlies aus einer Mischung aus Polyester- und Zellstoffasern (Mischungsverhältnis 20:80) mit einem Flächengewicht von 41 g/m² wurde in unabhängigen Versuchen mit den Dispersionen aus den angeführten Beispielen und Vergleichsbeispielen, die zuvor auf einen einheitlichen Feststoffgehalt von 25% verdünnt worden waren, getränkt, zur Abtrennung des überschüssigen Dispersionsanteils zwischen zwei gegenläufigen Walzen gebracht und danach 2 min einer Temperatur von 150 °C ausgesetzt. Das Faser:Binder-Verhältnis betrug in allen Fällen 3:1. Die Proben wurden in den angegebenen Fällen mit Persistol O® (kationische Lösung einer Fluorcarbon-Verbindung, BASF) hydrophobiert und 2 min bei 150 °C getrocknet.

Aus den Vliesstoffen wurden 50 mm breite Prüfstreifen geschnitten und nach Methode a)-d) geprüft. Die hierbei erzielten Ergebnisse sind in der folgenden Tabelle 3 niedergelegt.

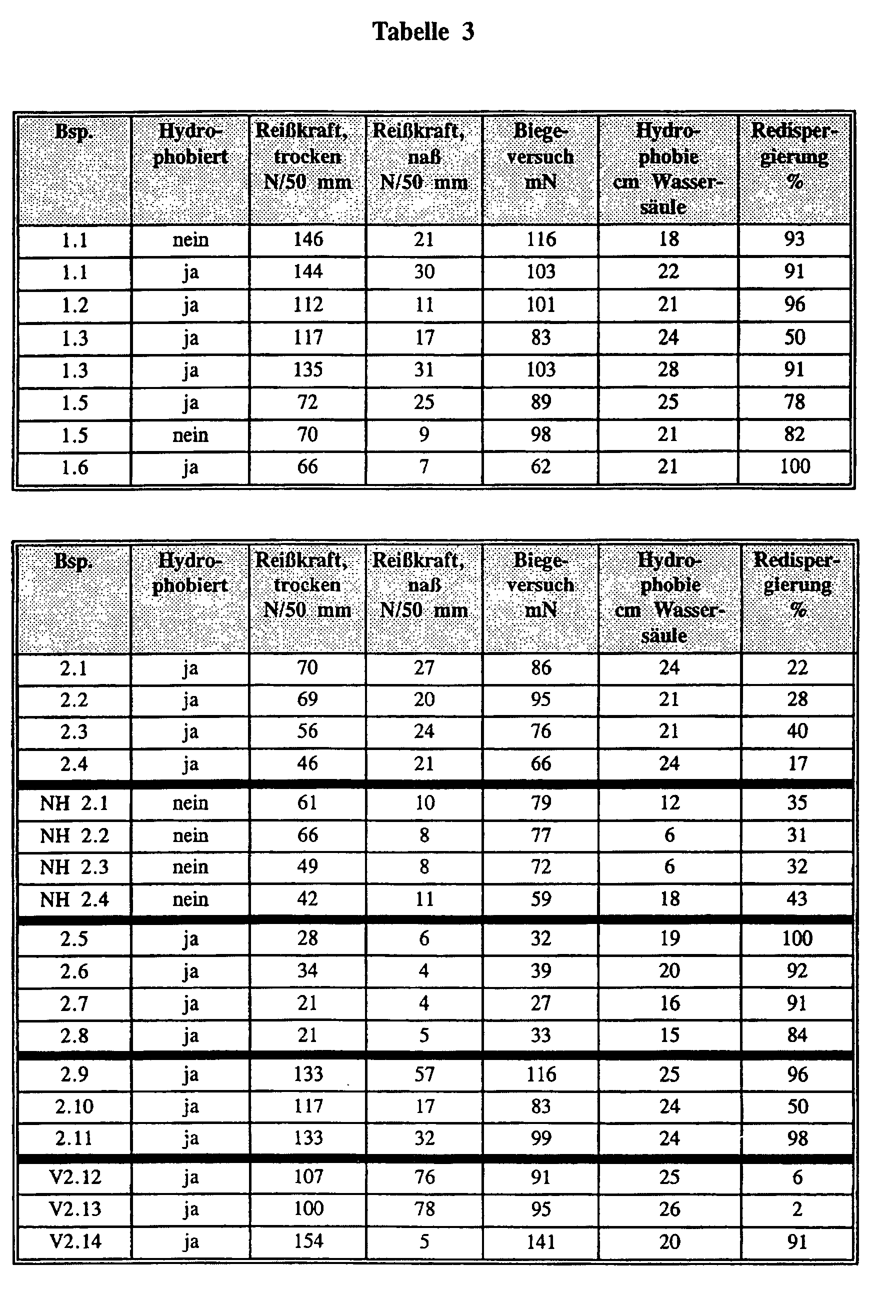

Die Vergleichsbeispiele V2.12 und V2.13 mit hohem Anteil an vernetzend wirkenden Monomeren zeigen die schlechte Redispergierung des Bindemittels bei hohem Niveau der Naßreißfestigkeit und Hydrophobie. V2.14 zeigt die untolerierbare Verschlechterung der Naßfestigkeit nach Teilneutralisation mit Calciumhydroxid, wie sie aus dem Stand der Technik bekannt ist.

Die Versuche NH-2.1 bis NH-2.4 zeigen, daß die Polymerdispersionen mit den erfindungsgemäßen Zusammensetzungen geeignet sind, um Vliesstoffen mäßige Redispergierbarkeit zu verleihen. Derartige Proben verfügen allerdings über ungenügende Naßfestigkeit und hohe Hydrophilie.

Die Mitverwendung von Hydrophobiermitteln (Versuche 2.1-2.4) erhöht die Naßreißfestigkeit und Hydrophobie, verbessert aber nicht die Redispergierbarkeit.

Eine Absenkung des Molekulargewichtes erhöht die Redispergierbarkeit.

Die Versuche 2.9-2.11 zeigen die Erhöhung der Naßreißfestigkeit durch Anhebung des Anteiles an hydrophilen Monomeren, die Absenkung der hohen Hydrophilie durch Zusatz von Hydrophobiermitteln und die Verbesserung der Redispergierbarkeit durch die Mitverwendung von regelnden Substanzen bei der Polymerisation.

### Beispiel 3.2:

Beispiel 1.1 wird wiederholt und daraus analog Beispiel 3.1 Vliesstoffe hergestellt. Der gebundene Vliesstoff wird dem Dispergiertest (Prüfung d) unterworfen und die Fasern abfiltriert, die erneut zur Herstellung von Vlies verwendet werden. Mit 230 Gewichtsteilen des wäßrigen Filtrates werden 100 Gew.-Teile der frischen Dispersion aus Beispiel 1.1 verdünnt, um eine Flotte mit einem Feststoffanteil von 15 Gew.% und einen pH-Wert von ca. 3.5 zu erhalten. Mit dieser Flotte werden erneut Vliesstoffe hergestellt und analog geprüft. Es wird eine Trockenreißfestigkeit von 125 N/5 cm, eine Naßfestigkeit von 25 N/5 cm und eine unverändert gute Dispergierbarkeit erzielt. Das Beispiel zeigt, daß auch das Bindemittel nach dem Herauslösen aus Abfall-Vliesstoffen erneut in den Produktionsprozeß eingeschleust werden kann. Die Verwendung von Recyclat-Dispersion ermöglicht damit auch 100%ige Ausnutzung des eingesetzten Bindemittels.

### Beispiel 4:

Ein Gemisch aus 250 g Wasser und 5,3 g Emulgator 5 werden auf 80 °C erhitzt, 17 g einer Lösung von 9,6 g Natriumpersulfat in 75 g Wasser zugegeben, die Monomeremulsion D4 in 120 min und der Rest der Initiatorlösung in 200 min zugegeben. Nach vollständiger Zugabe wird 1 h nachpolymerisiert. Es wurde eine koagulatfreie, 50 Gew.-%ige Dispersion mit einer mittleren Teilchengröße von 175 nm und einem pH-Wert von 2,5 erhalten. Der Anteil an flüchtigen Restmonomeren beträgt in Summe ca. 90 ppm. Die Glastemperatur des Polymerisates betrug -2 °C, die Molmasse (Mw) lag bei 47000 (GPC) und die Uneinheitlichkeit bei 7.0.

| *Zusammensetzung von D4:* | |
|---|---|
| 240 g [40%] | n-Butylacrylat |
| 273 g [45.5%] | Ethylacrylat |
| 87 g [14.5%] | Methacrylsäure |
| 6 g | tert-Dodecylmercaptan |
| 7 g | Natronlauge, 25%ig |
| 30 g | Emulgator 5 |
| 270 g | Wasser |

### Beispiel 5.1:

Analog Beispiel 4 wurde unter Zuhilfenahme der Monomeremulsion D5.1 und 0.6%, bezogen auf Monomermasse, an Natriumpersulfat eine Dispersion hergestellt. Es wurde eine koagulatfreie, 50 Gew.-%ige Dispersion mit einer mittleren Teilchengröße von 145 nm und einem pH-Wert von 5.1 erhalten. Der Anteil an flüchtigen Restmonomeren beträgt in Summe ca. 210 ppm. Die Glastemperatur des Polymerisates betrug +101 °C, die Molmasse (Mw) lag bei 25000 (GPC), die Uneinheitlichkeit bei 3.4.

| *Zusammensetzung von D5.1:* | |
|---|---|
| 358 g [55%] | Methylmethacrylat |
| 65 g [10%] | n-Butylacrylat |
| 130 g [20%] | Styrol |
| 98 g [15%] | Methacrylsäure |
| 9 g | tert-Dodecylmercaptan |
| 8 g | Natronlauge, 25 %ig |
| 46 g | Emulgator 5 |
| 320 g | Wasser |

### Beispiel 5.2:

Analog Beispiel 4 wurde eine Dispersion mit einer Polymerzusammensetzung von 98% Styrol, 1% Acrylsäure und 1% Methacrylamid unter Verwendung von 0,1% t-DMK und 0,6% an Emulgator 3 und 1,0% bezogen auf Monomermasse an Natriumpersulfat hergestellt. Nach 1 h Nachpolymerisieren wurde mit jeweils 0,2% tert-Butylhydroperoxid und 0,1% Natriumhydroxymethylsulfinat behandelt. Es wurde eine koagulatfreie, 56 Gew.-%ige Dispersion mit einer mittleren Teilchengröße von 150 nm und einem pH-Wert von 2,1 erhalten. Die Glastemperatur des Polymerisates betrug +101 °C.

### Beispiel 5.3:

Die Dispersionen aus Beispielen 4, 5.1 und 5.2 wurden bei Raumtemperatur verfilmt und 3 Tage bei Raumtemperatur trocknen gelassen und 30 min bei 140 °C getempert. Die Dispersionen und Filme wurden zur Prüfung bei 50 °C in verdünnter Ammoniak-Lösung (25 Gew.-%ig) bei pH = 11 gerührt und deren Löslichkeit beurteilt.

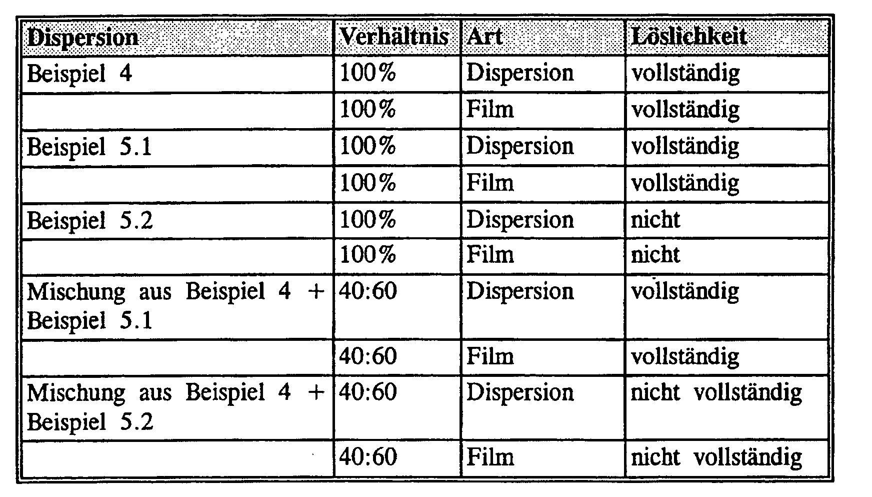

### Beispiel 5.4

Aus Dispersion des Beispieles 4 wird durch Auflösen der Dispersion in 25 Gew.-%iger Ammoniak-Lösung eine 10 Gew-%ige Polymerlösung hergestellt (pH ca. 10,5). Unter Rühren wird eine Lösung aus Natriumlaurylsulfat (NLS) zugesetzt und bei 95 °C durch langsame Zugabe von 5 Gew.-%iger Salzsäure der pH-Wert bis pH = 3 abgesenkt. Mit der pH-Wert-Veränderung entsteht aus der isotropen Lösung eine Dispersion, deren Partikelgröße nach Abkühlen und 1 h Rühren durch Lichtstreuung gemessen wurde.

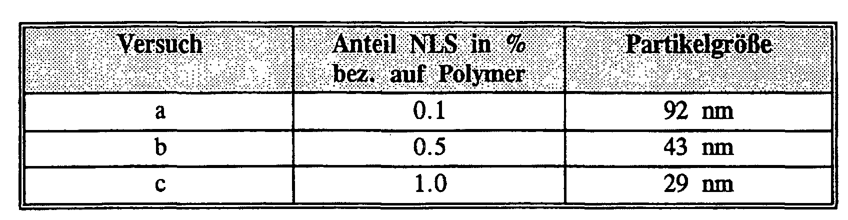

### Beispiel 6:

Eine Mischung der Dispersionen aus Beispiel 4 und Beispiel 5.1 (40:60) wird durch Zugabe von Natronlauge auf pH 8 eingestellt und nachträglich wird die Viskosität mit Polyacrylsäureverdicker (Latekoll® D - BASF) auf ca. 7000 mPas erhöht. Ein Polypropylen-Rohvlies-Zuschnitt (34 x 24 cm) wird von der Rückseite her mit der verdickten Dispersion gepflatscht (Feststoffauftrag von ca. 60%). Anschließend wird das gepflatschte Vlies bei 120 °C in einem Trockenschrank bis zur Gewichtskonstanz getrocknet und zwei rechteckige Zuschnitte (24 x 8 cm) hergestellt, daß ihre Längsseiten in Herstellungsrichtung des Vlieses verlaufen. Die Proben werden 20 h lang im Klimaraum aufbewahrt.

### Bestimmung der Dimensionsbeständigkeit:

Ein Zuschnitt wird in einem Rahmen unter einem IR-Strahlfeld (5 x 400 W, Abstand IR-Zuschnitt 22 cm) 130 sec lang von der Rückseite her erhitzt und dann sofort um 20% gedehnt, wobei eine Verschmälerung senkrecht zur Dehnungsrichtung verhindert wird. Während des Dehnungsvorgangs wird der zur Dehnung benötigte Kraftaufwand registriert. Das gedehnte Vlies wird abgekühlt und noch im gedehnten Zustand ein rechteckiger Prüfkörper ausgestanzt, dessen Länge sofort gemessen wird. Die Prüfkörper werden 5 h lang im Trockenschrank auf 90 °C erwärmt, nach Abkühlen auf Raumtemperatur ihre Längenabnahme gemessen und daraus die prozentuale Verkürzung berechnet.

### Ergebnisse:

Verformungskraft 52 N, Dimensionsbeständigkeit 2,4%. In der gleichen Prüfung wurde für einen üblichen Binder für verformbaren Nadelvliesbodenbelag im Durchschnitt 65 N, resp. 2,8% gefunden. Als Vergleichsdispersion dient Styrofan DS 4020 (BASF AG), die als Bindemittel zur Herstellung von thermoverformbaren Bodenbelägen vertrieben wird.

### Verformung:

Ein Zuschnitt (21 x 21 cm) wird in einer besonderen Vorrichtung eingespannt, 90 sec unter einem IR-Strahlfeld (3 x 400 W, Abstand IR-Zuschnitt 15 cm) von der Rückseite her erhitzt, verformt (Formmaß ca. 8,5 x 8,5 x 3,5 cm) und anschließend 20 sec abgekühlt. Danach wird das verformte Teil qualitativ beurteilt: Paßgenauigkeit ist gut und es treten keine Seitenrisse auf.

### Beispiel 7:

Eine Mischung der Dispersionen aus Beispiel 4 und Beispiel 5.1 (40:60) wird durch Zugabe von Natronlauge auf pH 8 eingestellt und auf eine Flottenkonzentration von 25% verdünnt. Ein Polypropylen Rohvlies-Zuschnitt wird gewogen und in die Flotte eingelegt, das nasse Vlies zwischen zwei Walzen bis zu einer Gewichtszunahme von ca. 100%, abgequetscht. Die Trocknung erfolgt in einem Frischluft-Trockenschrank bei 120 °C bis zur Gewichtskonstanz. Angestrebt wird eine Bindemittelaufnahme von ca. 25%. Nach einer Konditionierung (20 h Klimaraum) wird der Nadelvliesbodenbelag auf Steifigkeit geprüft: mindestens 2 Proben einer Größe von 20 x 10 cm in Längsrichtung werden mit der Oberseite nach oben in eine Biegevorrichtung eingelegt. Der Prüfling wird mit Hilfe eines Bügels bei einer Geschwindigkeit von 150 mm/min nach oben gezogen. Dabei wird die maximal auftretende Kraft in N registriert.

### Ergebnis:

Maximal-Kraft = 6,0 N. In der gleichen Prüfung wurde für einen üblicher Binder für verformbaren Nadelvliesbodenbelag im Durchschnitt 12,5 N gefunden, also ein deutlich steiferes Produkt.

### 8. Trennung des Bindemittels vom Vliesstoff

### Beispiel 8:

Proben des rückenbeschichteten Teppichs aus Beispiel 6 (Probe A), 7 (Probe B) und Probe C (analog Beispiel 7) werden jeweils bei 50 °C in Ammoniak-Lösung (25 Gew-%, pH = 10) 2 h gerührt, die Mischung abgekühlt und der unlösliche Faserbrei abfiltriert. Die abfiltrierten Fasern werden zur Herstellung von neuem Nadelvlies eingesetzt. Die Prüfung wird viermal wiederholt und der Binderverlust bestimmt. Der Binderverlust ist im Falle A und B nahezu quantitativ, im Falle C werden ca. 60% des Bindemittels abgetrennt. Die Hartphase pudert aus dem trockenen Faserbrei aus.

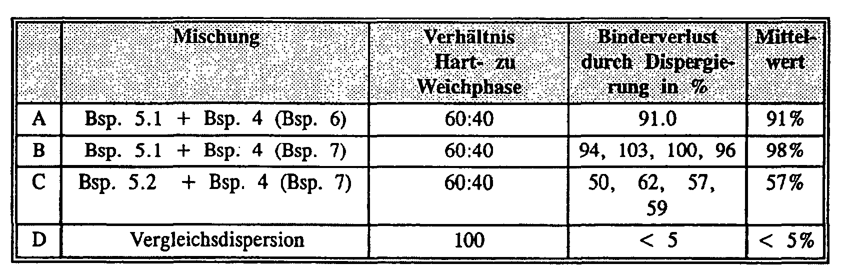

Die Prüfung zeigt, daß bei Verwendung einer gut löslichen Hart- als auch einer gut löslichen Weichphase eine vollständige Trennung des Bindemittels erzielt wird. Selbst wenn die Hartphase für sich alleine unlöslich ist, wird doch in Mischung mit einer geringeren Menge einer löslichen Weichphase ein Teil der Hartphase mit herausgelöst. Die restliche, an den Fasern anhaftende Hartphase läßt sich leicht durch mechanische Behandlung ablösen.

### 9. Redispergierung des abgetrennten Bindemittels

### Beispiel 9:

Die Filtrate aus Beispiel 8 (Flottenkonzentration ca. 5%) werden mit 0,1% Natriumlaurylsulfat versetzt, auf 95 °C erhitzt und mit 5 Gew.-%iger Salzsäure unter Rühren bis pH = 3,5 angesäuert. Die Teilchengrößen der Dispersionen werden durch Lichtstreuung bestimmt.

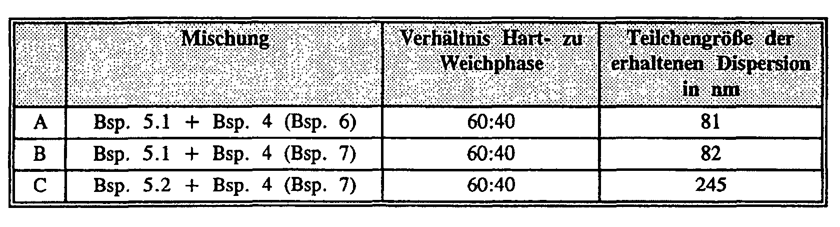

Das vollständig auflösbare Bindemittel (Fall A und B) dispergiert wieder zu einer feinteiligen Dispersion, während die unlöslichen aber dennoch zum Teil in Beispiel 8 getrennten Hartphasen-Anteile in Fall C die in der Lichtstreuung dominierenden Teilchen darstellen.

### 10. Recycling des redispergierten Bindemittels: Abmischung mit frischer Dispersion

### Beispiel 10:

Die Dispersionen B und C aus Beispiel 9 wurden zu frischem Bindemittel, einer Mischung aus Hart- und Weichkomponente im Verhältnis 60:40, zugesetzt. Der Recyclieranteil gibt den Anteil an recycliertem Polymer zu Gesamtpolymer (= Recyclat + frisches Bindemittel) an. Mit dieser Mischung wird analog Beispiel 7 jeweils ein neuer Vliesstoff hergestellt. Dessen Recycling-Fähigkeit wird analog Beispiel 8 geprüft und an 6 Proben durchgeführt.

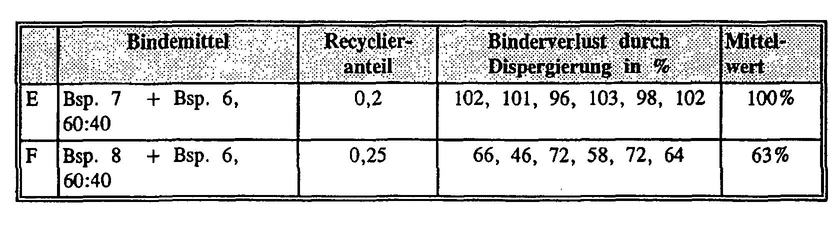

Die Filtrate aus den Versuchen E und F werden analog Beispiel 8 angesäuert. Die auf pH = 3,5 gestellten Lösungen bilden Dispersionen, deren Teilchengröße sich kaum von denen in Beispiel 9 unterscheiden.

### 11. Recycling des redispergierten Bindemittels: Aufkonzentriert und pur als Bindemittel eingesetzt

### Beispiel 11:

Die Dispersion A aus Beispiel 9 wird mit Hilfe eines Rotationsverdampfer auf 31.5% aufkonzentriert. Ein Polypropylen-Rohvlies wird mit dieser Dispersion analog Beispiel 6 ausgerüstet und die thermoplastischen Eigenschaften erneut bestimmt.

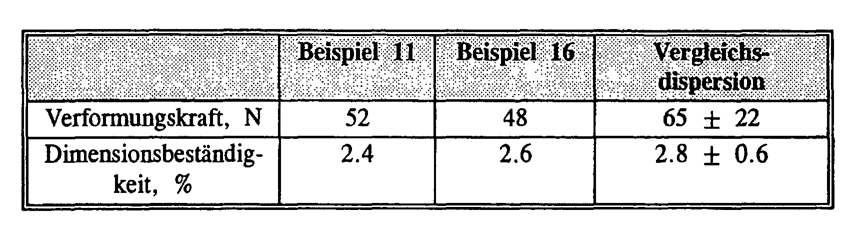

## Patentansprüche

1. Wiederverwertbarer Faserverbundwerkstoff, bei dem die Fasern durch ein durch radikalische Polymerisation erhaltenes polymeres Bindemittel miteinander verbunden werden, **dadurch gekennzeichnet, daß** es sich bei diesem um ein bei pH-Werten > 9 auflösbares und durch Absenken des pH-Wertes redispergierbares filmbildendes Bindemittel mit einer der nachfolgenden Zusammensetzung I) bis V) handelt:
I) 60 bis 85 Gew.-% n-Butylacrylat oder Ethylacrylat, 5 bis 20 Gew.-% Acrylnitril oder Methylmethacrylat oder Styrol und 10 bis 20 Gew.-% Methacrylsäure oder Acrylsäure.
II) 50 bis 80 Gew.-% n-Butylacrylat, 10 bis 50 Gew.-% Vinylacetat oder Vinylpropionat und 1 bis 30 Gew.-% Methacrylsäure oder Acrylsäure.
III) 30 bis 50 Gew.-% n-Butylacrylat, 30 bis 50 Gew.-% Ethylacrylat und 5 bis 30 Gew.-% Methacrylsäure oder Acrylsäure.
IV)40 bis 80 Gew.-% Methylmethacrylat, 10 bis 30 Gew.-% n-Butylacrylat oder Ethylhexylacrylat, 01 bis 20 Gew.-% Styrol und 5 bis 30 Gew.-% Methacrylsäure oder Acrylsäure.
V) 50 bis 80 Gew.-% Butadien, 10 bis 30 Gew.-% Styrol und/oder Acrylnitril, 5 bis 30 Gew.-% Methacrylsäure.

2. Faserverbundwerkstoff nach Anspruch 1, **dadurch gekennzeichnet, daß** einer oder mehrere der nachstehend genannten Polymerisationsregler r¹ - r⁹ bei der radikalischen Polymerisation des polymeren Bindemittels eingesetzt werden:
r¹) Lineare oder verzweigte, aliphatische oder aromatische Mono- oder Polythiole, die gegebenenfalls weitere, hydrophilierende Gruppen enthalten können, vorzugsweise tert-Dodecylmercaptan, Tris(methoxy)silylpropanthiol (MTMO) oder Thioethanol;
r²) Disulfide, Xanthogenate, Cystein oder Cysteinsäureester;
r³) Thioglykolsäure und deren Derviate, vorzugsweise Ammonium- oder Alkalimetallsalze oder deren Ester, davon vorzugsweise der Ethylester, 2-Ethylhexylester, Allylester oder Benzylester, insbesondere der 2-Ethylhexylester;
r⁴) Halogenverbindungen des Ethans, Propans oder Butans, vorzugsweise Bromtrichlormethan, Tetrabrommethan oder Tetrachlormethan, insbesondere Bromtrichlormethan;
r⁵) Allylverbindungen, vorzugsweise Allylalkohol, Butenol, Butendiol, Itaconsäure, Diallylphthalat, Triallylcyanurat, Diallylether, Allylsulfobernsteinsäureester oder Allyl-(meth)acrylat, insbesondere Allylalkohol, Butenol oder Butendiol;
r⁶) Glykolderivate, vorzugsweise Polyethylenglykol, Polyethylenglykol-monoalkylether oder -bis-alkylether, Polyethylenglykol-mono-alkylethersulfate oder - phosphate, Polyethylenglykol-mono-arylether, Polyethylenglykol-monoarylethersulfate oder -phosphate, bei denen gegebenenfalls ein Teil des Ethylenoxi-Monomeren durch Propylen- oder Butylenoxid-Monomer ersetzt ist, insbesondere neutralisierte Fettalkoholpolyethylenoxidsulfate mit C₁₂-C₁₈-Alkylresten und 2 bis 60 Mol Ethylenoxid (EO) oder deren nicht sulfatierte Analoge oder Alkylarylpolyethylenoxide bzw. deren sulfatierten Analoge mit C₆-C₁₂-Alkylresten und 2-60 Mol EO.
r⁷) Glykol, Diethylenglykol oder niedere Alkylether davon, Dioxan oder niedermolekulare monofunktionelle Alkohole, vorzugsweise Ethanol, n-Propanol, iso-Propanol, n- und iso-Butanol;
r⁸) Aldehyde, vorzugsweise Acetaldehyd, Propionaldehyd, Benzaldehyd vorzugsweise Acrolein.
r⁹) Hypophosphorige Säure und deren Salze, vorzugsweise Natriumhypophosphit.

3. Faserverbundwerkstoff nach Anspruch 1 oder 2, **dadurch gekennzeichnet, daß** der bei Anwendungstemperatur filmbildende Polymerisatanteil eine Glasübergangstemperatur von -50 bis +60°C, vorzugsweise von -40 bis +30°C, aufweist und/oder daß die wäßrige Polymerisatdispersion zusätzlich zu dem bei Anwendungstemperatur filmbildenden Polymerisatanteil einen bei Anwendungstemperatur nicht filmbildenden Polymerisatanteil, der vorzugsweise eine Glasübergangstemperatur > 60°C bis 150°C aufweist, enthält, und/oder daß zusätzlich Hydrophobierungsmittel auf Basis von Fluor- oder Siliconverbindungen mitverwendet werden oder die Faserverbundwerkstoffe nachträglich mit diesen Hydrophobierungsmitteln behandelt worden sind.

4. Faserverbundwerkstoff nach einem der Ansprüche 1 bis 3, **dadurch gekennzeichnet, daß** der Faserwerkstoff Papier oder ein Faservliesstoff ist, insbesondere ein Material aus der Gruppe ausgewählt aus synthetischen Faser, vorzugsweise Viskose, Polyester-, Polyamid-, Polypropylen-, Polyacrylnitril-, Carbonfasern oder Fasern von Homo- und Copolymerisaten des Vinylchlorides oder Tetrafluorethylens, Fasern natürlichen Ursprungs, vorzugsweise Zellstoff-, Zellwolle-, Cellulose-, Baumwolle-, Holzfasern, Glas-, Keramik-, oder Mineralfasern oder Mischungen hiervon.

5. Artikel enthaltend einen Faserverbundwerkstoff nach einem der Ansprüche 1 bis 4.

6. Artikel nach Anspruch 5, in Form eines Einwegartikels, Hygieneartikels oder Textilartikels.

7. Verfahren zur Herstellung eines Faserverbundwerkstoffs nach einem der Ansprüche 1 bis 4, **dadurch gekennzeichnet, daß** auf einen geeigneten Papier- oder Faservliesstoff auf an sich bekannte Art und Weise, vorzugsweise durch Badimprägnieren, Schaumimprägnieren, Besprühen, Pflatschen, Schaumpflatschen, Rakelauftrag oder Bedrucken, das in Form einer wäßrigen Polymerisatdispersion vorliegende Bindemittel, das wie in einen der Ansprüche 1 bis 3 offenbart aufgebaut ist, aufgetragen wird, gegebenenfalls gefolgt von einer Trocknung, wobei die Trocknung vorzugsweise zwischen 100 und 230°C durchgeführt wird, sowie gegebenenfalls einer Hydrophobierung des erhaltenen Vliesstoffs.

8. Verfahren nach Anspruch 7, **dadurch gekennzeichnet, daß** der Polymerisatanteil der wäßrigen Polymerisatdispersion 30 bis 70 Gew.-%, vorzugsweise 40 bis 68 Gew.-% insbesondere 45 bis 65 Gew.-% beträgt.

9. Polymeres Bindemittel wie in einem der Ansprüche 1 bis 3 offenbart.

10. Polymeres Bindemittel nach Anspruch 9, wobei das Bindemittel in Form einer wässrigen Lösung vorliegt, die das Bindemittel enthält.
